# EUROPÄISCHE PATENTSCHRIFT

(11) **EP 0 840 760 B1**
(45) Veröffentlichungstag und Bekanntmachung des Hinweises auf die Patenterteilung: **27.10.1999**
(21) Anmeldenummer: 96926354.0
(22) Anmeldetag: 16.07.1996
(51) Int. Cl.: C08G 75/02, H01M 8/00

(54) **POLYMERELEKTROLYTE UND VERFAHREN ZU DEREN HERSTELLUNG**
POLYMER ELECTROLYTES AND PROCESS FOR THEIR PRODUCTION
ELECTROLYTES POLYMERES ET LEUR PROCEDE DE PRODUCTION

(30) Priorität: 27.07.1995 DE 19527435; 22.12.1995 DE 19548425
(43) Veröffentlichungstag der Anmeldung: 13.05.1998
(73) Patentinhaber: Hoechst Research & Technology Deutschland GmbH & Co. KG, 65929 Frankfurt am Main (DE)
(72) Erfinder: HELMER-METZMANN, Freddy, D-55270 Essenheim (DE); SCHLEICHER, Andreas, D-65614 Beselich (DE); SCHNELLER, Arnold, D-64409 Messel (DE); WITTELER, Helmut, D-65929 Frankfurt am Main (DE)
(86) Internationale Anmeldenummer: EP9603118
(87) Internationale Veröffentlichungsnummer: WO9705191

(56) Entgegenhaltungen:
- US-A- 3 948 865
- JOURNAL OF POLYMER SCIENCE, POLYMER CHEMISTRY EDITION, Bd. 27, Nr. 9, 1.August 1989, Seiten 3043-3051, XP000128565 MONTONERI E: "THE PRODUCTS OF THE REACTION OF POLYPHENYLENE SULFIDE WITH SO3 AND SOCL2"
- POLYMERS FOR ADVANCED TECHNOLOGIES, Bd. 5, Nr. 6, 1.Juni 1994, Seiten 309-312, XP000450995 SONG H Y ET AL: "THERMOSTABLE POLY(P-PHENYLENE SULFIDE SULFONIC ACID) AS ION EXCHANGERS"

## Beschreibung

Die vorliegende Erfindung betrifft Verbindungen der Klasse Polyarylensulfid-sulfonsäure, die gute Löslichkeit in polar=aprotischen Lösemitteln besitzen, deren Verwendung sowie ein Verfahren zum Herstellen solcher Polyarylensulfidsulfonsäuren.

Polyarylensulfid, insbesondere Poly-p-phenylensulfid, ist als Polymeres bekannt, das sich durch eine besondere Widerstandsfähigkeit in bezug auf chemische und thermische Einflüsse auszeichnet. Um dieses Polymere aber für den Einsatz in wäßrigen Medien verwenden zu können, ist es zweckmäßig, seine Hydrophilie zu erhöhen. Eine Methode, um dieses Ziel mittels einer Sulfonierungsreaktion zu erreichen, beschreibt die US-A-4,110,265. Dabei wird Polyphenylsulfid mit Oleum umgesetzt und ergibt ein sulfoniertes Produkt, das als Kationenaustauschermaterial eingesetzt wird. Allerdings wird dieses Material als ein komplett unlösliches und darüber hinaus auch unschmelzbares vernetztes Polymer beschrieben, wodurch jedwede Weiterverarbeitung dieses Materials sehr erschwert wird. Die US-A 4,199,321 beschreibt die Verbesserung der Färbbarkeit von PPS Fasern durch Sulfonierung mit H₂SO₄, SO₃ und Oleum. Die hier beschriebenen Fasern sind aber nur an ihrer Oberfläche sulfoniert.

Der vorliegenden Erfindung lag die Aufgabe zugrunde, ausgehend von üblichen Polyarylensulfiden eine Möglichkeit zu schaffen, daraus durch Modifizierung Polymere herzustellen, die in polar-aprotischen Lösemitteln löslich sind und die sich beispielsweise leicht zu Folien weiterverarbeiten lassen. Eine weitere Aufgabe besteht darin, ausgehend von üblichen Polyarylensulfiden Kationenaustauscher herzustellen, die in polar-aprotischen Lösemitteln löslich sind.

Gelöst wird diese Aufgabe durch eine Polyarylensulfid-sulfonsäure, die aus einem Polyarylensulfid erhalten wird, deren Kennzeichenmerkmal darin zu sehen ist, daß sie löslich ist in polar-aprotischen Lösemitteln, insbesondere einer Menge mehr als 5 Gew% in N-Methylpyrrolidon bei einer Lösetemperatur von 5°C.

Als andere polar aprotische Lösemittel können beispielhaft genannt werden N-Methylpyrrolidon (NMP), Dimethylacetamid (DMAC), Dimethylsulfoxid (DMSO) oder Dimethylformamid (DMF).

Als Polyarylensulfide eignen sich im Rahmen der vorliegenden Erfindung allgemein Polymere, deren Hauptkette aus den Wiederholungseinheiten der allgemeinen Form

[-S-Ar-]

gebildet wird. Ar steht in der allgemeinen Formel für 1,4-Phenylen, 1,3-Phenylen, 1,2-Phenylen, Biphenylen, Naphthylen, Anthrylen oder eine andere bivalente aromatische Einheit. Die mittleren Molekulargewichte M_{w} geeigneter Polyarylensulfide liegen vorzugsweise im Bereich von 2000 bis 200 000 g/mol. Besonders bevorzugt wird im Rahmen der vorliegenden Erfindung Poly-p-phenylensulfid eingesetzt, das ein mittleres Molekulargewicht M_{w} von > 50 000 g/mol besitzt und bei dem die aromatische Einheit ausschließlich 1,4-Phenylen ist, was durch ¹H-NMR-Spektroskopie festgestellt werden kann. Außerdem werden solche Poly-[1,4-phenylensulfide] verwendet, die in beschränktem Umfang vernetzt, gleichwohl aber schmelzbar und löslich sind. Die besonders bevorzugten Polyarylensulfide sind unter den Markennamen ® Fortron (Fortron Industries) oder ®Ryton (Phillips Petroleum) am Markt bekannt geworden.

Unter einer Polyarylensulfid-sulfonsäure soll im Rahmen der vorliegenden Erfindung ein Polymeres verstanden werden, das in einem Umfang von 0.1 bis 100 Mol-%, bevorzugt von 2 bis 40 Mol-%, bezogen auf die Gesamtmenge an Wiederholungseinheiten, sulfoniert ist, d.h. es befinden sich Sulfonsäurereste (-SO₃H) an den aromatischen Einheiten. Ferner können die aromatischen Einheiten in einem Umfang von 0 bis 40 Mol-%, bevorzugterweise von 5 bis 25 Mol-%, bezogen auf die Gesamtmenge an Wiederholungseinheiten, chloriert sein und die Sulfidbrücken zwischen den aromatischen Einheiten können in einem Umfang von 0 bis 100 Mol-%, ebenfalls bezogen auf die Gesamtmenge an Wiederholungseinheiten, zu Sulfoxid oxidiert sein.

Die folgenden Strukturformeln zeigen beispielhaft Wiederholungseinheiten, die in der angesprochenen Polyarylensulfid-sulfonsäure enthalten sein können.

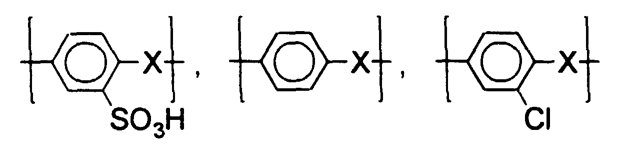

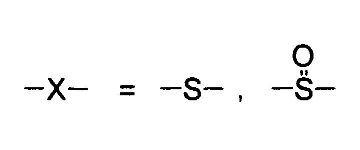

Die erfindungsgemäße Polyarylensulfid-sulfonsäure löst sich in einer Menge von mehr als 5 Gew.-% in N-Methyl-pyrrolidon, wobei die lösliche Polyarylensulfidsulfonsäure ein mittleres Molekulargewicht von 2000 bis 200 000 g/mol besitzt, bevorzugt ≥ 20 000 bis 100 000 g/mol.

Das Verfahren zum Herstellen der erfindungsgemäßen Polyarylensulfidsulfonsäure kann als Chlorsulfonierung von Polyarylensulfid umschrieben werden. Dabei wird zunächst das Polyarylensulfid bei einer Temperatur im Bereich von -10 bis + 20°C zu 5 bis 15 Gew.-% in Chlorsulfonsäure vollständig gelöst, anschließend bei Reaktionstemperaturen im Bereich von 5 bis 20°C, ggf. unter Zusatz von Oleum oder Essigsäureanhydrid, gerührt und danach in wäßrigem Medium ausgefällt. In einem alternativen erfindungsgemäßen Verfahren wird das Polyarylensulfid zuerst nicht in reiner Chlorsulfonsäure, sondern direkt in einer Mischung aus Chlorsulfonsäure und Oleum vollständig gelöst.

Unter dem Begriff Chlorsulfonierung soll im Rahmen der vorliegenden Erfindung eine Eintopfreaktion verstanden werden, bei der neben der eigentlichen Sulfonierung der aromatischen Einheiten zum Teil auch eine Oxidation der Sulfidbrücken zwischen den aromatischen Einheiten zum Sulfoxid und gleichzeitig partiell auch eine Aromatenchlorierung stattfindet.

Die Zugabe von Oleum oder Essigsäureanhydrid ist nicht unbedingt erforderlich, um erfindungsgemäß lösliche Polyarylensulfid-sulfonsäure zu erhalten, aber wenn die Chlorsulfonierungsreaktion durch die genannten Zusatzmittel unterstützt wird, kann ggf. die Reaktionsdauer entsprechend verkürzt werden. Außerdem werden so bei gegebener Löslichkeit insgesamt höhere Sulfonierungsgrade erzielt. Die Zusatzmengen an Oleum oder Essigsäureanhydrid (Ac₂O) liegen üblicherweise bei 10 bis 200 Gew.-% Oleum, bezogen auf das Gewicht an der Chlorsulfonsäure, oder bei 5 bis 30 Gew.-% Essigsäureanhydrid, ebenfalls bezogen auf das Gewicht der Chlorsulfonsäure.

In einem weiteren Verfahrensschritt wird das chlorsulfonierte Material in Wasser suspendiert und gekocht, so daß Polyarylensulfid-sulfonsäurechlorid zu Polyarylensulfid-sulfonsäure umgesetzt wird. Diese wird im folgenden auch als sulfoniertes Polyarylensulfid bezeichnet, und kann neben den Sulfonsäuregruppen an den Aromaten gebundene Chloratome und Sulfoxidbrücken enthalten. Von Polyarylensulfid-sulfonsäure können Lösungen oder Dispersionen in Fluiden, bevorzugt in polar-aprotischen Lösungsmitteln und in Lösungen dieser Lösungsmittel mit Wasser und aliphatischen Alkoholen hergestellt werden.

Nach den oben beschriebenen Verfahren sind auch Polymere erhältlich, die aufgrund ihres hohen Sulfonierungsgrades wasserlöslich sind.

Durch Einwirkung geeigneter Oxidationsmittel, beispielsweise H₂O₂, O₃, HNO₃ und N₂O₄, kann der Oxidationszustand der Sulfid- und Sulfoxidbrücken in dem sulfonierten Polyarylensulfid verändert werden, so daß sich der Sulfoxidanteil bis auf 100 mol-% erhöht oder daß die Sulfid- und Sulfoxidbrücken zu einem Anteil bis zu 100 mol-% in Sulfongruppen (-SO₂-) umgewandelt werden. Auch die so erhaltenen Materialien sind, wie oben angesprochen, thermisch und chemisch sehr beständig und in polar-aprotischen Lösemitteln löslich.

Das nach dem erfindungsgemäßen Verfahren hergestellte sulfonierte Polyarylensulfid und seine Oxidationsprodukte eignen sich infolge ihrer Löslichkeit hervorragend zur Weiterverarbeitung zu Beschichtungen, Formkörpern, zu Folien oder zu Fasern. Insbesondere können daraus aber Membranen hergestellt werden, die sich durch eine Protonenleitfähigkeit im Bereich von 2 bis 200 mS/cm, vorzugsweise von 5 bis 50 mS/cm, auszeichnen. Solche Membranen werden vorteilhaft in Elektrolytkondensatoren und in elektrochemischen Zellen, insbesondere in Brennstoffzellen und Elektrolysezellen eingesetzt. Bei den hier genannten Elektrolytkondensatoren handelt es sich insbesondere um vom Fachmann als Superkondensatoren bezeichnete Gebilde; das sind Elektrolytkondensatoren, die keine elektrisch isolierende Schicht zwischen Elektrode und Elektrolyt besitzen.

Die nachfolgenden Beispiele sollen die Erfindung für den Fachmann noch deutlicher beschreiben, ohne daß aber eine Einschränkung auf die konkret dargestellten Ausführungsformen daraus abgeleitet werden soll. Alle Beispiele wurden mit einer PPS-Type erarbeitet, die von Fortron Group als ®Fortron W300 erhältlich ist. Es handelt sich dabei um unverzweigtes Poly-[1,4-phenylensulfid] mit einem mittleren Molekulargewicht M_{w} von 90 000 g/mol.

### Beispiel 1

In 220 ml Chlorsulfonsäure werden bei der in der Tabelle 1 angegebenen Temperatur unter Rühren 12 g PPS gelöst. Nach 30 min wird die Lösung auf die in der Tabelle 1 angegebene Reaktionstemperatur erwärmt und über die ebenfalls angegebene Reaktionsdauer gerührt. Die Aufbereitung geschieht durch Ausgießen in eine Mischung aus 2 kg Eis und 600 ml 30 %ige Schwefelsäure. Der Niederschlag wird anschließend über eine Zeit von 15 h in Wasser gekocht, dann abfiltriert und getrocknet. Die Eigenschaften des Produktes sind in der Tabelle 1 angegeben.

### Vergleichsbeispiel 1

Wie in Beispiel 1 werden 12 g PPS in 220 ml Chlorsulfonsäure gelöst. Lösungstemperatur, Lösungsdauer, Reaktionstemperatur und Reaktionsdauer sind der Tabelle 1 zu entnehmen. Nach der Aufarbeitung des Reaktionsproduktes, die wie in Beispiel 1 durchgeführt wurde, konnte ein polymeres Material erhalten werden, dessen Eigenschaften in der Tabelle 1 angegeben sind.

### Vergleichsbeispiel 2

15 g PPS wie in Beispiel 1 werden in 300 ml Chlorsulfonsäure gelöst. Lösungstemperatur, Lösungsdauer, Reaktionstemperatur und Reaktionsdauer ergeben sich aus der Tabelle 1. Nach der Aufarbeitung wie in Beispiel 1 wurde ein Produkt erhalten, dessen Eigenschaften aus der Tabelle 1 hervorgehen.

### Beispiel 2

Wie in Vergleichsbeispiel 2 werden 15 g PPS in 300 ml Chlorsulfonsäure gelöst. Lösungs- und Reaktionsbedingungen sind in der Tabelle 1 ausgewiesen. Nach Aufarbeitung des Reaktionsprodukts wie in Beispiel 1 wurde ein hellgelbes Polymer erhalten, dessen Eigenschaften in der Tabelle 1 angegeben sind. Die inhärente Viskosität des Polymers in NMP-Lösung beträgt 1,5 dl/g.

**TABELLE 1**

| | Beispiel 1 | Vergleichsbeispiel 1 | Beispiel 2 | Vergleichsbeispiel 2 |
|---|---|---|---|---|
| Lösungstemperatur | 5 °C | -25 °C | 5 °C | 5 °C |
| Lösungsdauer | 30 min | 120 min | 30 min | 30 min |
| Reaktionstemperatur | 20 °C | 0 °C | 20 °C | 20 °C |
| Reaktionsdauer | 150 min | 240 min | 60 min | 150 min |
| Reaktionstemperatur zusätzlich | - | - | - | 50 °C |
| Reaktionsdauer zusätzlich ⁴⁾ | - | - | - | 60 min |
| Zugabe an Oleum (9,8 % SO₃) in ml | - | - | 30 ml | - |
| Zugabe an Ac₂O in ml | - | - | - | - |
| SF ¹⁾ | 4 | 14 | 2 | 35 |
| Cl ²⁾ | 5 | 10 | 4 | 32 |
| L_{NM} ³⁾ | 20 | < 3 | > 40 | < 3 |

| | | | | |
|---|---|---|---|---|
| ¹⁾ SF: Anzahl der zusätzlich eingeführten Schwefelatome pro 100 Phenylensulfid-Wiederholungseinheiten gemäß Elementaranalyse | | | | |
| ²⁾ Cl: Anzahl der pro 100 Phenylensulfid-Wiederholungseinheiten eingeführten Chloratome gemäß Elementaranalyse | | | | |
| ³⁾ L_{NMP}: Löslichkeit in N-Methyl-pyrrolidon in Gew.-% | | | | |
| ⁴⁾ Zusätzliche Reaktionsdauer nach Zugabe von Oleum oder Ac₂O. | | | | |

### Beispiel 3

10 g PPS werden in 300 ml Chlorsulfonsäure gelöst. Lösungs- und Reaktionsbedingungen sind in der Tabelle 2 angegeben. Nach Aufarbeitung des Reaktionsprodukts wurde ein bräunlich gefärbtes Material erhalten, dessen Eigenschaften in der Tabelle 2 angegeben sind.

### Beispiel 4

Ein nach Beispiel 2 erhaltenes Polymer wird unter Erwärmen zu 40 Gew.-% in N-Methylpyrrolidon gelöst. Die auch bei 20°C flüssige und klare Lösung wurde mit einer Rakel zu einem Film mit einer Dicke von 100 µm ausgestrichen und bei einer Temperatur von 100°C im Umluftofen getrocknet. Auf diese Weise entstand eine durchsichtige flexible Folie an der folgende Messungen vorgenommen wurden:
a) Zug/Dehnungsversuch nach ISO 527.
   Reißdehnung = 4 %.
b) Bestimmung des Elastizitätsmoduls gemäß DIN 53 455 nach Young = 6 GPa.
c) Kristallstruktur durch Röntgenweitwinkelstreuung (Cu_{Kα} -Strahlung, Ni-gefiltert, 2⊖=3° bis 58°) → röntgenamorph.

### Beispiel 5

In 300 ml Chlorsulfonsäure werden bei der in der Tabelle 2 angegebenen Temperatur unter Rühren 15 g PPS gelöst. Nach 15 min wird die Lösung auf die in der Tabelle 2 angegebene Reaktionstemperatur erwärmt und über die ebenfalls angegebene Reaktionsdauer gerührt. Nach Oleumzugabe und Weiterreaktion wie in Tabelle 2 angegeben wurde das Reaktionsprodukt wie in Beispiel 1 beschrieben aufgearbeitet und ergab ein hellgelbes Produkt. Die Eigenschaften des Produktes sind in der Tabelle 2 angegeben.

Eine Säure/Base Titration einer Lösung des Produktes aus Beispiel 5 ergab eine Ionenaustauschkapazität von 0,93 mmol/g. Das mittlere Molekulargewicht M_{w} wurde durch Gelpermeations-Chromatographie bestimmt und lag bei 70 000 g/mol.

Die Bestimmung der Ionenaustauscher-Kapazität (lon Exchange Capacity, IEC) erfolgt, indem 150 mg Produkt in 100 ml DMSO gelöst und mit NaOH=Lösung (0,025 N in H₂O/DMSO, 50 Vol% DMSO) titriert werden. Der Äquivalenzpunkt wird durch Farbumschlag von Phenolphthalein oder konduktometrisch ermittelt.

Die Messung der Wechselstromleitfähigkeit erfolgt an Membranen einer Dicke von 60 bis 100 µm, die über 0,5 %ige Schwefelsäure mit den Elektroden eines handelsüblichen Konduktometers kontaktiert werden. Zur Vorbehandlung wurden die Membranen einen Tag in Wasser eingelegt. Die Messung der Wechselstromleitfähigkeit erfolgte bei 20°C und einer Frequenz von 1000 Hz.

### Beispiel 6

Wie in Beispiel 5 wurden 15 g PPS in 300 ml Chlorsulfonsäure gelöst. Die weiteren Reaktionsbedingungen sind in Tabelle 2 angegeben, die Aufbereitung erfolgte wie in Beispiel 1 und ergab ein hellgelbes Produkt, dessen Eigenschaften in der Tabelle 2 aufgeführt sind. Eine Säure/Base Titration einer Lösung des Produktes aus Beispiel 6 ergab eine Ionenaustauschkapazität von 3,2 mmol/g. Das Polymer ist röntgenamorph.

### Beispiel 7

In 100 ml Chlorsulfonsäure werden bei der in der Tabelle 2 angegebenen Temperatur unter Rühren 5 g PPS wie in Beispiel 5 gelöst. Die weiteren Reaktionsbedingungen ergeben sich aus Tabelle 2. Nach Aufbereitung wie in Beispiel 1 wurde ein hellgelbes Produkt erhalten, dessen Eigenschaften die Tabelle 2 angibt. Die Bestimmung der Ionenaustauschkapazität wie in den Beispielen 5 und 6 ergab einen Wert von 2,98 mmol/g. Das Polymer ist röntgenamorph.

**TABELLE 2**

| | Beispiel 3 | Beispiel 5 | Beispiel 6 | Beispiel 7 |
|---|---|---|---|---|
| Lösungstemperatur | 5°C | 5 °C | 5 °C | 20 °C |
| Lösungsdauer | 30 min | 15 min | 60 min | 20 min |
| Reaktionstemperatur | 5°C | 20 °C | 20 °C | 20 °C |
| Reaktionsdauer | | 30 min | - | - |
| Zugabe an Ac₂O in ml | 100 | - | - | - |
| Zugabe an Oleum (15% SO₃) in ml | - | 100 | 100 | 33 |
| Reaktionsdauer zusätzlich⁴⁾ | 345 min | 120 min | 300 min | 145 min |
| IEC ¹⁾ | 2,75 | 3,2 | 2,98 | 0,93 |
| Cl ²⁾ | > 30 | 3 | 7 | 14 |
| L_{NMP} ³⁾ | 10 | > 20 | > 20 | > 50 |
| Leitfähigkeit in mS/cm ⁵⁾ | - | 2,8 | 50 | 25 |

| | | | | |
|---|---|---|---|---|
| ¹⁾ IEC: lonenaustauscherkapazität in mmol/g | | | | |
| ²⁾ Cl: Anzahl der pro 100 Phenylensulfid-Wiederholungseinheiten eingeführten Chloratome gemäß Elementaranalyse | | | | |
| ³⁾ L_{NMP}: Löslichkeit in N-Methyl-pyrrolidon in Gew.-% | | | | |
| ⁴⁾ Zusätzliche Reaktionsdauer nach Zugabe von Oleum oder Ac₂O. | | | | |
| ⁵⁾ Messung wie in Beispiel 5 beschrieben. | | | | |

Bei allen Beispielen wurde eine ESCA-spektroskopische Untersuchung des Reaktionsproduktes durchgeführt. Danach zu urteilen sind in allen oben genannten Materialien die Sulfidbrücken zu 20% bis 80% zum Sulfoxid oxidiert.

### Beispiel 8

Im Reaktionsprodukt aus Beispiel 6 liegt das molare Verhältnis von Sulfid- zu Sulfoxidbrücken laut ESCA-Spektroskopie bei 73 zu 27. Das Reaktionsprodukt wird in 200 ml einer Mischung aus 30% H₂O₂ und Eisessig (Mischungsverhältnis Volumina 1:1) suspendiert und 30 min gekocht, filtriert und getrocknet. Danach liegt das molare Verhältnis von Sulfid- zu Sulfoxidbrücken bei 15 zu 85. Das Reaktionsprodukt ist zu >20 Gew.-% in NMP löslich.

### Beispiel 9

Das Reaktionsprodukt aus Beispiel 6 wird 15 min in einem Ozonstrom mit 20 g O₃ pro m³ begast. Durch ESCA sind danach keine Sulfidbrücken und 22 Mol-% Sulfoxidbrücken nachzuweisen. Der Rest sind nach ESCA Sulfonbrücken. Das Reaktionsprodukt ist zu > 10 Gew.-% in NMP löslich.

In den obengenannten Beispielen lag die chemische Ausbeute der Umsetzungen bei über 90%.

## Patentansprüche

1. Polyarylensulfid-sulfonsäure, dadurch gekennzeichnet, daß sie sich bei einer Lösetemperatur von 5°C in einer Menge von mehr als 5 Gew.-% in N-Methyl-pyrrolidon löst.

2. Polyarylensulfid-sulfonsäure nach Anspruch 1, dadurch gekennzeichnet, daß sie erhalten wird aus einem Polyarylensulfid, dessen Hauptkette überwiegend aus den Wiederholungseinheiten der allgemeinen Form
[-S-Ar-]
gebildet wird, wobei Ar für 1,4-Phenylen, 1,3-Phenylen, 1,2-Phenylen, Biphenylen, Naphthylen, Anthrylen oder eine andere bivalente aromatische Einheit steht.

3. Polyarylensulfid-sulfonsäure nach Anspruch 2, dadurch gekennzeichnet, daß Ar für 1,4-Phenylen steht.

4. Polyarylensulfid-sulfonsäure nach einem der Ansprüche 1 bis 3, dadurch gekennzeichnet, daß ihr mittleres Molekulargewicht M_{w} im Bereich von 2000 bis 200 000 g/mol liegt, bevorzugt im Bereich von ≥ 20 000 g/mol.

5. Polyarylensulfid-sulfonsäure nach einem der Ansprüche 1 bis 4, dadurch gekennzeichnet, daß sie in einer Menge von 0.1 bis 100 Mol-%, vorzugsweise von 2 bis 40 Mol-%, bezogen auf die Gesamtmenge an Wiederholungseinheiten, Sulfonsäuregruppen oder Sulfonsäurechloridgruppen trägt, und daß sie in einer Menge von 0 bis 40 Mol-%, vorzugsweise von 5 bis 25 Mol-%, bezogen auf die Gesamtmenge an Wiederholungseinheiten, Chloratome trägt.

6. Polyarylensulfid-sulfonsäure nach einem der Ansprüche 1 bis 5, dadurch gekennzeichnet, daß die Sulfidbrücken zwischen den aromatischen Einheiten in einem Umfang von 0 bis 100 Mol-%, vorzugsweise von 20 bis 80 Mol-%, bezogen auf die Gesamtmenge an Wiederholungseinheiten, zum Sulfoxid oder zum Sulfon oxidiert sind.

7. Lösung oder Dispersion einer Polyarylensulfid-sulfonsäure nach einem der Ansprüche 1 bis 7 in einem Fluid.

8. Verfahren zum Herstellen von Polyarylensulfid-sulfonsäure nach einem der Ansprüche 1 bis 7 dadurch gekennzeichnet, daß das Polyarylensulfid in Chlorsulfonsäure oder in einer Mischung von Chlorsulfansäure mit Oleum oder Azetanhydrid vollständig gelöst wird, daß dann ggf. Oleum oder Azetanhydrid zugesetzt wird und daß danach in wäßrigem Medium ausgefällt wird.

9. Verfahren nach Anspruch 8, dadurch gekennzeichnet, daß als Polyarylensulfid Poly-[1,4-phenylensulfid] eingesetzt wird.

10. Verfahren nach Anspruch 8 oder 9, dadurch gekennzeichnet, daß die Herstellung der Lösung in Chlorsulfonsäure oder in einer Mischung von Chlorsulfonsäure mit Oleum oder Azetanhydrid bei einer Temperatur im Bereich von -10°C bis + 20°C und daß die nachfolgende Weiterreaktion bei einer Temperatur im Bereich von + 5°C bis + 20°C erfolgt.

11. Verfahren nach einem der Ansprüche 8 bis 10, dadurch gekennzeichnet, daß das Polyarylensulfid in einer Menge von 5 bis 15 Gew.-% in Chlorsulfonsäure gelöst wird und daß ggf. Oleum in einer Menge von 10 bis 200 Gew.-%, bezogen auf das Gewicht an Chlorsulfonsäure, zugesetzt wird.

12. Verfahren nach einem der Ansprüche 8 bis 10, dadurch gekennzeichnet, daß Azetanhydrid in einer Menge von 1 bis 30 Gew.-%, bezogen auf das Gewicht an Chlorsulfonsäure, eingesetzt wird.

13. Verwendung von Polyarylensulfid-sulfonsäure gemäß einem der Ansprüche 1 bis 7 zur Herstellung von Beschichtungen, Formkörpern, Folien, Membranen oder Fasern.

14. Verwendung von Polyarylensulfid-sulfonsäure gemäß einem der Ansprüche 1 bis 6 zur Herstellung von Membranen für die Fiitration, insbesondere für die Mikro-, Nano- und Ultrafiltration.

15. Verwendung von Polyarylensulfid-sulfonsäure gemäß einem der Ansprüche 1 bis 6 zur Herstellung von protonenleitfähigen Membranen, insbesondere mit einer Protonenleitfähigkeit im Bereich von 2 bis 200 mS/cm.

16. Verwendung von Polyarylensulfid sulfonsäure gemäß Ansprüchen 1 bis 6 zur Herstellung von Membranen für Kondensatoren und elektrochemische Zellen, insbesondere für Brennstoffzellen und Elektrolysezellen.

## Claims

1. A polyarylene sulfide-sulfonic acid which dissolves in N-methylpyrrolidone in an amount of more than 5% by weight at a dissolving temperature of 5°C.

2. A polyarylene sulfide-sulfonic acid as claimed in claim 1, which is obtained from a polyarylene sulfide whose main chain is chiefly formed from the recurring units of the form
[-S-Ar-]
in which Ar is 1,4-phenylene, 1,3-phenylene, 1,2-phenylene, biphenylene, naphthylene, anthrylene or another bivalent aromatic unit.

3. A polyarylene sulfide-sulfonic acid as claimed in claim 2, in which Ar is 1,4-phenylene.

4. A polyarylene sulfide-sulfonic acid as claimed in one of claims 1 to 3, in which its average molecular weight M_{w} is in the range from 2000 to 200 000 g/mol, preferably in the range of ≥ 20 000 g/mol.

5. A polyarylene sulfide-sulfonic acid as claimed in one of claims 1 to 4, which carries sulfonic acid groups or sulfonic acid chloride groups in an amount of 0.1 to 100 mol%, preferably 2 to 40 mol%, based on the total amount of recurring units, and which carries chlorine atoms in an amount of 0 to 40 mol%, preferably 5 to 25 mol%, based on the total amount of recurring units.

6. A polyarylene sulfide-sulfonic acid as claimed in one of claims 1 to 5, in which the sulfide bridges between the aromatic units are oxidized to sulfoxide or to sulfone to an extent of 0 to 100 mol%, preferably 20 to 80 mol%, based on the total amount of recurring units.

7. A solution or dispersion of a polyarylene sulfide-sulfonic acid as claimed in one of claims 1 to 6 in a fluid.

8. A process for the preparation of a polyarylene sulfide-sulfonic acid as claimed in one of claims 1 to 7, which comprises dissolving the polyarylene sulfide completely in chlorosulfonic acid or in a mixture of chlorosulfonic acid with oleum or acetic anhydride, subsequently adding oleum or acetic anhydride, if appropriate, and then precipitating the product in an aqueous medium.

9. The process as claimed in claim 8, wherein poly-[1,4-phenylene sulfide] is employed as the polyarylene sulfide.

10. The process as claimed in claim 8 or 9, wherein the preparation of the solution in chlorosulfonic acid or in a mixture of chlorosulfonic acid with oleum or acetic anhydride is carried out at a temperature in the range from -10°C to +20°C, and the subsequent further reaction is carried out at a temperature in the range from +5°C to +20°C.

11. The process as claimed in one of claims 8 to 10, wherein the polyarylene sulfide is dissolved in chlorosulfonic acid in an amount of 5 to 15% by weight and, if appropriate, oleum is added in an amount of 10 to 200% by weight, based on the weight of chlorosulfonic acid.

12. The process as claimed in one of claims 8 to 10, wherein acetic anhydride is employed in an amount of 1 to 30% by weight, based on the weight of chlorosulfonic acid.

13. The use of a polyarylene sulfide-sulfonic acid as claimed in one of claims 1 to 7 for the production of coatings, shaped articles, films, membranes or fibers.

14. The use of a polyarylene sulfide-sulfonic acid as claimed in one of claims 1 to 6 for the production of membranes for filtration, in particular for micro-, nano- and ultrafiltration.

15. The use of a polyarylene sulfide-sulfonic acid as claimed in one of claims 1 to 6 for the production of membranes which conduct protons, in particular having a proton conductivity in the range from 2 to 200 mS/cm.

16. The use of a polyarylene sulfide-sulfonic acid as claimed in claims 1 to 6 for the production of membranes for capacitors and electrochemical cells, in particular for fuel cells and electrolysis cells.

## Revendications

1. Polysulfure d'arylène sulfoné, caractérisé en ce qu'il est soluble à une température de 5°C dans la N-méthyl-1-pyrrolidone en une quantité supérieure à 5 % en poids.

2. Polysulfure d'arylène sulfoné selon la revendication 1, caractérisé en ce qu'il est obtenu à partir d'un polysulfure d'arylène dont la chaîne principale est formée majoritairement par des unités répétitives de formule générale
[-S-Ar-]
dans laquelle Ar représente le 1,4-phénylène, le 1,3-phénylène, le 1,2-phénylène, le biphénylène, le naphtylène, l'anthrylène ou une autre unité aromatique divalente.

3. Polysulfure d'arylène sulfoné selon la revendication 2, caractérisé en ce que Ar représente le 1,4-phénylène.

4. Polysulfure d'arylène sulfoné selon l'une des revendications 1 à 3, caractérisé en ce que son poids moléculaire moyen M_{w} se situe dans la plage de 200C à 200 000 g/mol, de préférence dans la plage ≥ 20 000 g/mol.

5. Polysulfure d'arylène sulfoné selon l'une des revendications 1 à 4, caractérisé en ce qu'il porte des groupes acide sulfonique ou des groupes sulfochlorure en une quantité allant de 0,1 à 100 % en moles, de préférence de 2 à 40 % en moles, ramenée à la quantité totale d'unités répétitives, et en ce qu'il porte des atomes de chlore en une quantité allant de 0 à 40 % en moles, de préférence de 5 à 25 % en moles, ramenée à la quantité totale d'unités répétitives.

6. Polysulfure d'arylène sulfoné selon l'une des revendications 1 à 5, caractérisé en ce que les ponts sulfure entre les unités aromatiques sont oxydés en sulfoxyde ou en sulfone jusqu'à concurrence de 0 à 100 % en moles, de préférence de 20 à 80 % en moles, ramené à la quantité totale d'unités répétitives.

7. Solution ou dispersion d'un polysulfure d'arylène sulfoné selon l'une des revendications 1 à 7 dans un fluide.

8. Procédé de préparation de polysulfure d'arylène sulfoné selon l'une des revendications 1 à 7, caractérisé en ce que l'on dissout complètement le polysulfure d'arylène dans de l'acide chlorosulfonique ou dans un mélange d'acide chlorosulfonique et d'oléum ou d'anhydride acétique, en ce qu'on ajoute ensuite le cas échéant de l'oléum ou de l'anhydride acétique et en ce qu'on effectue ensuite une précipitation en milieu aqueux.

9. Procédé selon la revendication 8, caractérisé en ce que le polysulfure d'arylène utilisé est le polysulfure de 1,4-phénylène.

10. Procédé selon la revendication 8 ou 9, caractérisé e ce que la préparation de la solution dans l'acide chlorosulfonique ou dans un mélange d'acide chlorosulfonique et d'oléum ou d'anhydride acétique se fait à une température dans la plage de -10°C à +20°C et en ce que la réaction ultérieure qui s'ensuit se fait à une température dans la plage de +5°C à +20°C.

11. Procédé selon l'une des revendications 8 à 10, caractérisé en ce que le polysulfure d'arylène est dissous dans l'acide chlorosulfonique en une quantité de 5 à 15 % en poids et en ce que l'on ajoute le cas échéant de l'oléum en une quantité de 10 à 200 % en poids ramenée au poids de l'acide chlorosulfonique.

12. Procédé selon l'une des revendications 8 à 10, caractérisé en ce que l'on utilise de l'anhydride acétique en une quantité de 1 à 30 % en poids, ramenée au poids de l'acide chlorosulfonique.

13. Utilisation de polysulfure d'arylène sulfoné selon l'une des revendications 1 à 7 pour fabriquer des revêtements, des corps moulés, des feuilles, des membranes ou des fibres.

14. Utilisation de polysulfure d'arylène sulfoné selon l'une des revendications 1 à 6 pour fabriquer des membranes destinées à la filtration, en particulier des membranes de micro-, nano- et ultrafiltration.

15. Utilisation de polysulfure d'arylène sulfoné selon l'une des revendications 1 à 6 pour fabriquer des membranes capables de conduire des protons, en particulier des membranes ayant une conductibilité protonique de 2 à 200 mS/cm.

16. Utilisation de polysulfure d'arylène sulfoné selon les revendications 1 à 6 pour fabriquer des membranes destinées à des condensateurs et à des cellules électrochimiques, en particulier pour des piles à combustible et des cellules d'électrolyse.
